# EUROPÄISCHE PATENTANMELDUNG

(11) **EP 1 930 980 A1**
(43) Veröffentlichungstag der Anmeldung: **11.06.2008**
(21) Anmeldenummer: 07023870.4
(22) Anmeldetag: 10.12.2007
(51) Int. Cl.: H01Q 7/00, H01Q 1/22, G06K 19/077, H01Q 9/27

(54) **Antenne für einen rückstreubasierten RFID-Transponder**

(30) Priorität: 09.12.2006 DE 102006058168
(71) Anmelder: ATMEL Germany GmbH, 74072 Heilbronn (DE)
(72) Erfinder: Fischer, Martin, Dipl.-Ing., 74629 Pfedelbach (DE); Camp, Michael, Dr.-Ing., 29221 Celle (DE)
(74) Vertreter: Müller, Wolf-Christian

(57) **Zusammenfassung**

Die Erfindung betrifft eine Antenne für einen rückstreubasierten RFID-Transponder mit einer eine kapazitive Eingangsimpedanz aufweisenden integrierten Empfangsschaltung zum Empfangen eines spektral in einem Betriebsfrequenzbereich liegenden Funksignals, wobei die Antenne zwei Antennenzweige aufweist, die sich spiralförmig von einem zentralen Bereich, in dem die Antennenzweige mit der integrierten Empfangsschaltung verbindbar sind, nach außen erstrecken. Erfindungsgemäß ist eine ringförmige Leiterbahn vorgesehen, die sich vollständig um den zentralen Bereich erstreckt und ausgestaltet ist, die Antennenzweige leitend miteinander zu verbinden. Die Erfindung betrifft weiterhin einen rückstreubasierten RFID-Transponder mit einer solchen Antenne.

## Beschreibung

Die vorliegende Erfindung betrifft eine Antenne für einen rückstreubasierten RFID-Transponder (radio frequency identification) sowie einen rückstreubasierten RFID-Transponder.

Die Erfindung liegt auf dem Gebiet der draht- und kontaktlosen Kommunikation. Sie liegt insbesondere auf dem Gebiet der funkbasierten Kommunikation zum Zwecke der Identifikation von Gegenständen, Tieren, Personen etc. sowie den hierfür eingesetzten Transpondern und "Remote Sensors". Wenngleich prinzipiell auf beliebige kontaktlose Kommunikationssysteme anwendbar, werden die vorliegende Erfindung sowie die ihr zugrunde liegende Problematik nachfolgend in Bezug auf RFID-Kommunikationssysteme und deren Anwendungen erläutert. RFID steht hierbei für "Radio Frequency Identification".

Bei RFID-Systemen werden zwischen einer stationären oder mobilen Basisstation, die oft auch als Lesegerät, "Reader" oder Schreib-/Lesegerät bezeichnet wird, und einem oder mehreren Transpondem, die an den zu identifizierenden Gegenständen, Tieren bzw. Personen angebracht sind, Daten mit Hilfe von hochfrequenten Funksignalen bidirektional übertragen.

Der Transponder, der auch als "Tag" oder "Label" bezeichnet wird, weist regelmäßig eine Antenne zum Empfangen des von der Basisstation abgestrahlten Funksignals sowie eine mit der Antenne verbundene integrierte Schaltung (IC) auf. Die integrierte Schaltung beinhaltet hierbei eine Empfangsschaltung zum Empfangen und Demodulieren des Funksignals sowie zum Detektieren und Verarbeiten der gesendeten Daten. Außerdem weist die integrierte Schaltung einen Speicher zum Ablegen der für die Identifikation des entsprechenden Gegenstandes erforderlichen Daten auf. Weiterhin kann der Transponder einen Sensor z.B. zur Temperaturmessung, der z.B. ebenfalls Teil der integrierten Schaltung ist, umfassen. Solche Transponder werden auch als "Remote Sensors" bezeichnet.

RFID-Transponder können überall dort vorteilhaft eingesetzt werden, wo eine automatische Kennzeichnung, Erkennung, Abfrage oder Überwachung erfolgen soll. Mit Hilfe von solchen Transpondern sind Gegenstände wie z.B. Behälter, Paletten, Fahrzeuge, Maschinen, Gepäckstücke, aber auch Tiere oder Personen Individuell markierbar und kontaktlos sowie ohne Sichtverbindung identifizierbar, Bei "Remote Sensors" können darüber hinaus physikalische Eigenschaften bzw. Größen erfasst und abgefragt werden.

Auf dem Gebiet der Logistik können Container, Paletten und dergleichen identifiziert werden, um beispielsweise im Verlauf ihres Transportes den aktuellen Aufenthaltsort zu bestimmen. Bei "Remote Sensors" kann z.B. die Temperatur der transportierten Waren oder Güter regelmäßig gemessen und abgespeichert und zu einem späteren Zeitpunkt ausgelesen werden. Auf dem Gebiet des Plagiatschutzes können Gegenstände wie z.B. integrierte Schaltungen mit einem Transponder versehen werden, um unautorisierte Nachbauten zu verhindern, Im Handelsbereich können RFID-Transponder die vielfach auf Produkten angebrachten Barcodes ersetzen. Weitere Anwendungen bestehen z.B. im Kraftfahrzeugbereich bei Wegfahrsperren oder Systemen zur Überwachung des Luftdrucks in Reifen sowie in Systemen zur Personen-Zugangskontrolle.

Passive Transponder verfügen nicht über eine eigenständige Energieversorgung und entnehmen die für ihren Betrieb erforderliche Energie dem von der Basisstation emittierten elektromagnetischen Feld. Semi-passive Transponder weisen zwar eine eigene Energieversorgung auf, verwenden die durch sie bereitgestellte Energie aber nicht zum Senden/Empfangen von Daten, sondern beispielsweise zum Betreiben eines Sensors.

RFID-Systeme mit passiven und/oder semi-passiven Transpondem, deren maximaler Abstand von der Basisstation deutlich über einem Meter liegt, werden in Frequenzbereichen betrieben, die insbesondere im UHF- oder Mikrowellenbereich liegen.

In solchen passiven/semipassiven RFID-Systemen mit relativ großer Reichweite kommt zur Datenübertragung von einem Transponder zur Basisstation im allgemeinen ein Rückstrahlverfahren ("Backscattering") zum Einsatz, im Zuge dessen ein Teil der von der Basisstation beim Transponder ankommenden Energie reflektiert (rückgestrahlt) wird. Hierbei wird das von der Basisstation abgestrahlte Trägersignal in der integrierten Schaltung des Transponders entsprechend den an die Basisstation zu übertragenden Daten moduliert und mittels der Transponder-Antenne reflektiert. Solche Transponder werden als rückstreubasierte Transponder bezeichnet.

Um bei rückstreubasierten Transpondern eine möglichst große Reichweite zu erzielen, ist es erforderlich, einen möglichst hohen Anteil der von der Basisstation beim Transponder ankommenden Energie der integrierten Empfangsschaltung des Transponders zuzuführen. Leistungsverluste jeglicher Art sind hierbei zu minimieren. Hierzu sind einerseits Transponder-Antennen mit einem relativ breiten Empfangsfrequenzbereich erforderlich. Solche relativ breitbandigen Antennen können darüber hinaus den Vorteil bieten, die Anforderungen mehrerer nationaler oder regionaler Regulierungsbehörden mit nur einem Antennentyp zu erfüllen. Andererseits ist die von der Transponder-Antenne aufgenommene Energie möglichst ungeschmälert der integrierten Empfangsschaltung zuzuführen, die üblicherweise eine kapazitive Eingangsimpedanz, d.h. eine Impedanz mit negativem Imaginärteil aufweist.

Aus der DE 103 93 263 T5 ist eine Antenne für ein RFID-System bekannt, die eine Planarwendelstruktur mit zwei Zweigen aufweist. Ausgehend von einem zentralen Bereich erstrecken sich die beiden Zweige jeweils wendelförmig nach außen. Die Eingangsimpedanz dieser Antenne ist ebenfalls kapazitiv.

Nachteilig ist hierbei, dass die Impedanz dieser Antenne stark vom konjugiert komplexen Wert der Impedanz des Chipeingangsschaltkreises abweicht und deshalb zwischen Antenne und Chip ein zusätzlicher, separater Anpassungsschaltkreis mit einer Spule und einem Kondensator erforderlich ist. Aufgrund von parasitären Widerständen dieser Bauelemente kommt es transponderseitig zu Leistungsverlusten, die nachteiligerweise die Reichweite reduzieren. Weiterhin schränkt der separate Anpassungsschaltkreis die Freiheit bei der Platzierung des Chips ein und verursacht aufwendigere und daher kostenintensivere Implementierungen des Transponders.

Vor diesem Hintergrund liegt der Erfindung die Aufgabe zugrunde, eine Antenne für einen rückstreubasierten RFID-Transponder mit einer integrierten Empfangsschaltung (IC) zum Empfangen eines spektral in einem Betriebsfrequenzbereich liegenden Funksignals anzugeben, die größere Reichweiten sowie einfachere Implementierungen des Transponders ermöglicht und einen breitbandigen Empfang von hochfrequenten Funksignalen erlaubt. Es ist weiterhin die Aufgabe der Erfindung, einen einfach zu realisierenden rückstreubasierten RFID-Transponder anzugeben, der eine größere Reichweite bei einem breitbandigen Empfang von hochfrequenten Funksignalen aufweist.

Erfindungsgemäß wird diese Aufgabe gelöst durch eine Antenne und einen rückstreubasierten RFID-Transponder mit den Merkmalen der Patentansprüche 1 bzw. 22.

Die erfindungsgemäße Antenne weist zwei Antennenzweige auf, die sich spiralförmig von einem zentralen Bereich, in dem die Antennenzweige mit der integrierten Empfangsschaltung verbindbar sind, nach außen erstrecken, wobei eine ringförmige Leiterbahn vorgesehen ist, die sich vollständig um den zentralen Bereich erstreckt und ausgestaltet ist, die Antennenzweige leitend miteinander zu verbinden.

Der erfindungsgemäße RFID-Transponder weist eine integrierte Empfangsschaltung mit einer kapazitiven Eingangsimpedanz sowie eine mit der integrierten Empfangsschaltung verbundene erfindungsgemäße Antenne auf.

Das Wesen der Erfindung besteht darin, eine ringförmige Leiterbahn vorzusehen, die sich vollständig um den zentralen Bereich erstreckt und die beiden Antennenzweige leitend miteinander verbindet, d.h. kontaktiert. Hierdurch kommt es vorteilhaft zu Entartungen der Resonanzfrequenzen der Antenne, die größere Reichweiten und einen sehr breitbandigen Empfang erlauben und darüber hinaus einfachere und kostengünstigere Transponderrealisierungen ermöglichen.

Vorteilhafte Ausgestaltungen und Weiterbildungen der Erfindung sind den abhängigen Ansprüchen sowie der Beschreibung unter Bezugnahme auf die Zeichnung zu entnehmen.

In einer bevorzugten Ausführungsform weist jeder Antennenzweig eine Zweiglänge entlang des Zweiges auf und ist die Zweiglänge derart gewählt und die ringförmige Leiterbahn derart ausgestaltet, dass die Antenne eine Eingangsimpedanz mit einem im Betriebsfrequenzbereich induktiven Blindwiderstand aufweist, dessen Frequenzgang einen Wendepunkt im Betriebsfrequenzbereich aufweist. Bei der Ausgestaltung der ringförmigen Leiterbahn ist vorzugsweise die Form (kreisförmig, oval etc.) und die Bahnlänge entlang der Leiterbahn so gewählt, dass der Frequenzgang des Blindwiderstands einen Wendepunkt im Betriebsfrequenzbereich aufweist. Auf diese Art und Weise werden besonders breitbandige Antennen mit besonders hoher Reichweite ermöglicht, die nur eine kleine Fläche beanspruchen und einfach und kostengünstig zu implementieren sind.

In einer vorteilhaften Ausführungsform weist die ringförmige Leiterbahn eine Bahnbreite auf, die so gewählt ist, dass die Antenne Werte einer induktiven Eingangsimpedanz aufweist, die im Betriebsfrequenzbereich derart an die konjugiert komplexen Werte der kapazitiven Eingangsimpedanz angenähert sind, dass zwischen Antenne und integrierter Empfangsschaltung keine Schaltungsanordnung zur Impedanzanpassung erforderlich ist. Für integrierte Empfangsschaltungen mit typischen Impedanzwerten und -verläufen wird so die Eingangsimpedanz der Antenne im Betriebsfrequenzbereich derart an die konjugiert komplexen Werte der Eingangsimpedanz der Empfangsschaltung angenähert, dass keine separate Anpassungsschaltung zwischen Antenne und Empfangsschaltung erforderlich ist. Auf diese Weise werden transponderseitige Leistungsverluste reduziert, so dass sich hohe Reichweiten ergeben und ein breitbandiger Empfang möglich ist. Außerdem werden hierdurch besonders einfache und kostengünstige implementierungen des Transponders ermöglicht.

Vorzugsweise weist die ringförmige Leiterbahn eine Berandung auf, die so ausgestaltet ist, dass die Antenne Werte einer induktiven Eingangsimpedanz aufweist, die im Betriebsfrequenzbereich derart an die konjugiert komplexen Werte der kapazitiven Eingangsimpedanz angenähert sind, dass zwischen Antenne und integrierter Empfangsschaltung keine Schaltungsanordnung zur Impedanzanpassung erforderlich ist. Dies ermöglicht für eine Vielzahl von Empfangsschaltungen mit unterschiedlichen Impedanzwerten und -verläufen besonders einfache und kostengünstige Transponderrealisierungen, die dennoch eine hohe Reichweite und eine besonders große Bandbreite aufweisen.

In einer weiteren, vorteilhaften Ausführungsform bildet jeder Antennenzweig eine innere Radialwendel und eine äußere Radialwendel, wobei diese Radialwendeln vorzugsweise einer logarithmischen Funktion folgen. Derartige Antennen weisen vorteilhaft besonders große Bandbreiten auf.

Vorzugsweise sind die Antennenzweige planar ausgestaltet und liegen in einer gemeinsamen Ebene. Vorzugsweise umfaßt jeder Antennenzweig eine dünne leitfähige Schicht, die auf einem Substrat ausgebildet ist. Hierdurch kann die Antenne besonders einfach implementiert werden.

In einer bevorzugten Ausführungsform des erfindungsgemäßen RFID-Transponders ist die integrierte Empfangsschaltung im zentralen Bereich der Antennenzweige angeordnet. Dies ermöglicht sehr einfache Implementierungen des Transponders.

In einer weiteren, bevorzugten Ausführungsform umfaßt jeder Antennenzweig eine dünne leitfähige Schicht, die auf einem Substrat ausgebildet ist, und die integrierte Empfangsschaltung auf dem Substrat ausgebildet ist. Dies ermöglicht besonders einfache Implementierungen des Transponders.

Die Erfindung wird nachfolgend anhand der in den schematischen Figuren der Zeichnung angegebenen Ausführungsbeispiele näher erläutert. Hierbei zeigt
- Fig. 1: ein RFID-System mit einem erfindungsgemäßen Transponder;
- Fig. 2: ein erstes Ausführungsbeispiel einer erfindungsgemäßen Antenne;
- Fig. 3: ein zweites Ausführungsbeispiel einer erfindungsgemäßen Antenne; und
- Fig. 4: weitere Ausführungsbeispiele erfindungsgemäßer Antennen.

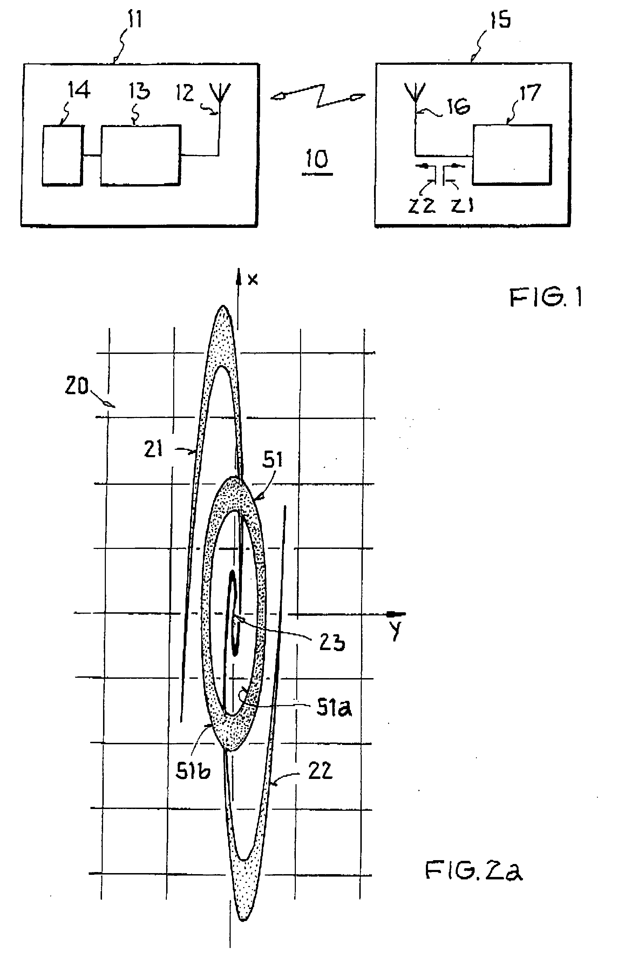

Fig. 1 zeigt schematisch ein Beispiel eines RFID-Systems. Das RFID-System 10 weist eine Basisstation 11 und mindestens einen erfindungsgemäßen Transponder 15 auf. Mit Hilfe von hochfrequenten Funksignalen tauscht die Basisstation 11 kontaktlos und bidirektional Daten mit dem/den Transponder(n) 15 aus.

Die Basisstation 11 weist mindestens eine Antenne 12 zum Senden und Empfangen von Funksignalen in einem Betriebsfrequenzbereich fB, eine mit der/den Antenne(n) verbundene Sende-/Empfangseinheit 13 zum Senden und Empfangen von Daten sowie eine mit der Sende-/Empfangseinheit verbundene Kontrolleinheit 14 zum Steuern der Sende-/Empfangseinheit 13 auf.

Der rückstreubasierte, passive oder semi-passive Transponder 15 weist eine Antenne 16 zum Empfangen des spektral im Betriebsfrequenzbereich fB liegenden Funksignals und eine mit der Antenne verbundene Empfangsschaltung 17 zum Demodulieren des empfangenen Funksignals und zum Detektieren der darin enthaltenen Daten auf. Die Empfangsschaltung 17 ist hierbei Teil einer in Figur 1 nicht dargestellten integrierten Schaltung (IC), z.B. eines ASICs (application specific integrated circuit) oder eines ASSPs (application specific standard product), die außerdem regelmäßig einen Speicher zum Ablegen der für eine Identifikation der entsprechenden Gegenstände erforderlichen Daten aufweist. Gegebenenfalls beinhaltet der Transponder 15 bzw. die integrierte Schaltung weitere in Fig. 1 nicht dargestellte Komponenten wie z.B. einen Sensor zur Temperaturbestimmung. Solche Transponder werden auch als "Remote Sensors" bezeichnet.

Nachfolgend wird davon ausgegangen, daß der Betriebsfrequenzbereich fB im UHF-Frequenzband liegt, und zwar in einem Frequenzbereich zwischen ca. 840 MHz und ca. 960 MHz. Alternativ kann sich der Betriebsfrequenzbereich auch im nahezu weltweit verfügbaren ISM-Band (industrial, scientific, medical) zwischen 2,4 und 2,5 GHz erstrecken. Weitere alternative Betriebsfrequenzbereiche liegen bei 315 MHz, 433 MHz bzw. 5,8 GHz.

Aufgrund von unterschiedlichen aktuellen Anforderungen der Regulierungsbehörden bzgl. der im Frequenzbereich zwischen 840 und 960 MHz maximal zulässigen Sendeleistungen werden im Lesebetrieb Reichweiten von ca. 10m für den europäischen Markt (2 W ERP) und ca. 11 m für die USA (4 W EIRP) angestrebt.

Die integrierte Empfangsschaltung 17 weist eine komplexwertige Eingangsimpedanz Z1 mit einem Realteil (Wirkwiderstand) R1 und einem Imaginärteil (Blindwiderstand) X1 auf. Der Wirkwiderstand R1 ist hierbei zur Minimierung von Leistungsverlusten vorzugsweise relativ klein. Der Blindwiderstand X1 ist regelmäßig kapazitiv (X1<0) und insbesondere bei kleinen Werten des Wirkwiderstandes R1 betragsmäßig deutlich größer als der Wirkwiderstand: |X1| > |R1|.

Von der Anmelderin entwickelte integrierte Empfangsschaltungen 17 weisen Eingangsimpedanzen Z1 mit Wirkwiderständen R1 im Bereich von ca. 4...35 Ohm und kapazitiven Blindwiderständen X1, deren Absolutwerte Ober ca. 170 Ohm liegen, auf, Der Betrag des Imaginärteils (|X1|) übersteigt den Realteil (R1) damit deutlich (|X1|> 4*R1). Bei fortschreitender Herstellungstechnologie von integrierten Schaltungen und damit abnehmenden Strukturgrößen ist von betragsmäßig weiter zunehmenden kapazitiven Blindwiderständen X1 auszugehen.

Die in Fig. 1 symbolisch dargestellte Antenne 16 des Transponders 15 umfaßt zwei Antennenzweige, die sich spiralförmig von einem zentralen Bereich, in dem die Antennenzweige mit der integrierten Empfangsschaltung 17 verbunden sind, nach außen erstrecken, sowie eine ringförmige Leiterbahn, die sich vollständig um den zentralen Bereich erstreckt und die Antennenzweige leitend miteinander verbindet.

Vorzugsweise umfassen die Antennenzweige und die ringförmige Leiterbahn jeweils eine dünne leitfähige Schicht z.B. aus Kupfer, Silber etc., die auf einem gemeinsamen Substrat z.B. aus Polyimid oder auf einer Leiterplatte ausgebildet ist. Vorzugsweise ist auf diesem Substrat auch die integrierte Empfangsschaltung 17 ausgebildet, die vorteilhaft im zentralen Bereich der Antenne 16 angeordnet ist. Alternativ kann die dünne leitfähige Schicht auf einer Folie aufgebracht sein, auf der mittels Flip-Chip-Technik die integrierte Empfangsschaltung 17 angeordnet ist. Der aus Antenne 16 und integrierter Empfangsschaltung 17 bestehende Transponder 15 wird schließlich an dem zu identifizierenden Gegenstand angebracht. Nachstehend sind Ausführungsbeispiele erfindungsgemäßer Antennen näher beschrieben.

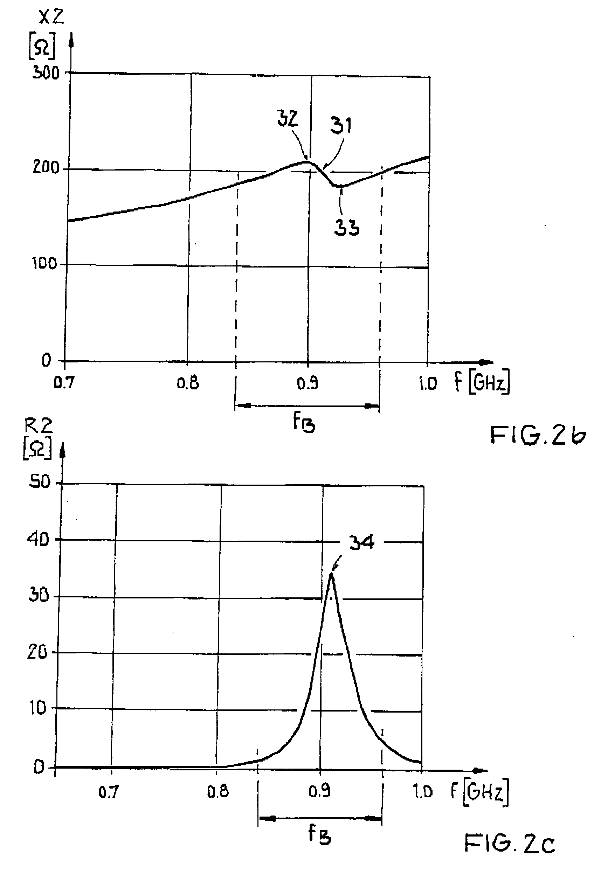

Figur 2 zeigt ein erstes Ausführungsbeispiel einer erfindungsgemäßen Antenne. In Fig. 2a ist hierbei die Antenne 20 in einer Draufsicht dargestellt, während die Figuren 2b-c schematisch den Frequenzgang der Eingangsimpedanz Z2 = R2 + j*X2 der Antenne 20 aus Fig. 2a zeigen. In Fig. 2b ist hierbei der Blindwiderstand X2, d.h. der Imaginärteil von Z2, über der Frequenz f aufgetragen, während in Fig. 2c der Wirkwiderstand R2, d.h. der Realteil von Z2, dargestellt ist. Der o.g. Betriebsfrequenzbereich fB zwischen ca. 840 MHz und ca. 960 MHz ist in den Fig. 2b-c hervorgehoben. Gemäß Fig. 2a weist die Antenne 20 zwei als Leiterbahnen ausgebildete Antennenzweige 21, 22 auf, die sich spiralförmig von einem zentralen Bereich 23, in dem die Antennenzweige mit der integrierten Empfangsschaltung 17 (siehe Fig. 1) verbunden (kontaktiert) sind, nach außen erstrecken. Weiterhin weist die Antenne 20 eine ringförmige Leiterbahn 51 auf, die sich vollständig um den zentralen Bereich 23 erstreckt und die beiden Antennenzweige 21, 22 leitend miteinander verbindet.

Die beiden Antennenzweige 21, 22 bilden eine in y-Richtung gestauchte bzw. in x-Richtung gestreckte (und daher längliche) logarithmische Spiralantenne. Bei einer logarithmischen Spiralantenne bildet jeder Antennenzweig 21, 22 eine innere und eine äußere Radialwendel, die den Zweig begrenzen und jeweils einer logarithmischen Funktion gehorchen.

Bis auf eine Drehung um 180 Grad sind die beiden Antennenzweige 21, 22 identisch und zueinander punktsymmetrisch ausgestaltet. Außerdem sind die Zweige planar ausgestaltet und liegen in einer gemeinsamen Ebene.

Die Länge entlang jedes Zweiges ist nachfolgend als Zweiglänge Lz bezeichnet. Hiermit ist die Wegstrecke vom Verbindungspunkt eines Zweiges mit der integrierten Empfangsschaltung 17, der auch als Speisepunkt bezeichnet wird, entlang des Zweiges bis zu seinem äußeren Endpunkt gemeint. Die Zweigbreite Wz quer zur Zweigleiterbahn, ändert sich entlang jedes Zweiges.

Die in Fig. 2a schematisch dargestellte Antenne hat in x-Richtung eine Ausdehnung von unter 100 mm, in γ-Richtung von ca. 17 mm, so dass sich diese Antenne insbesondere für eine Herstellung auf einem Band und/oder für Anwendungen eignet, bei denen eine längliche Fläche für die Antenne zur Verfügung steht. Die größte geometrische Abmessung dieser Antenne liegt für alle Wellenlängen λ = c/f des Betriebsfrequenzbereichs fB unterhalb des Wertes λ / π, so dass es sich bei der Antenne 20 gemäß der Definition von Wheeler (1975) um eine "elektrisch kleine" Antenne handelt. Die Antenne 20 ist damit besonders platzsparend, so dass besonders einfache und kostengünstige Transponderrealisierungen 15 ermöglicht werden.

Die ringförmige Leiterbahn 51 ist geschlossen (d.h. sie bildet einen geschlossenen Ring), punktsymmetrisch zu einem zentralen Punkt im Bereich 23 und - in diesem Ausführungsbeispiel - oval ausgebildet. Sie weist einen inneren ovalen Rand 51a und einen konzentrischen äußeren ovalen Rand 51 b auf, Die ringförmige Leiterbahn 51 liegt in der Ebene der Antennenzweige 21, 22 und bildet eine Parallelinduktivität zwischen den beiden Antennenzweigen 21, 22.

Vorzugsweise ist die ringförmige Leiterbahn 51 derart ausgestaltet und die Zweiglänge Lz derart gewählt, dass die Antenne 20 eine Eingangsimpedanz Z2 mit einem im gesamten Betriebsfrequenzbereich fB induktiven Blindwiderstand X2>0 aufweist, dessen Frequenzgang X2(f) einen Wendepunkt im Betriebsfrequenzbereich fB aufweist. Dieser Sachverhalt ist nachfolgend näher erläutert.

Aus dem in Fig. 2b gezeigten Frequenzgang X2(f) des Blindwiderstandes ist zu erkennen, dass der Blindwiderstand X2 schon an der unteren Grenze des Betriebsfrequenzbereichs fB, d.h. bei ca. 840 MHz, einen hohen induktiven Wert von über 180 Ohm erreicht. Mit zunehmenden Frequenzwerten steigt der Blindwiderstand X2 bis auf einen lokalen Maximalwert 32 von ca. 210 Ohm an, fällt anschließend leicht auf einen lokalen Minimalwert 33 von ca. 185 Ohm ab und steigt anschließend wieder an, bis an der oberen Grenze des Betriebsfrequenzbereichs fB, d.h. bei ca. 960 MHz, ein Wert von ca. 200 Ohm erreicht wird. Innerhalb des Betriebsfrequenzbereichs fB, nämlich bei ca. 910 MHz liegt im Sinne einer mathematischen Kurvendiskussion ein Wendepunkt 31 des Frequenzgangs X2(f).

Die in Fig. 2a dargestellte Antenne 20 ist so ausgestaltet, dass ihr Blindwiderstand X2 - wie in Fig. 2b gezeigt - im gesamten Betriebsfrequenzbereich fB induktiv (X2>0) ist und einen Frequenzgang X2(f) aufweist, der im Betriebsfrequenzbereich fB sowohl einen Wendepunkt 31 als auch einen lokalen Maximalwert 32 und einen lokalen Minimalwert 33 hat, die jeweils nicht an einem Rand des Betriebsfrequenzbereichs fB liegen. Hierzu sind insbesondere die Länge Lz der Antennenzweige 21, 22 und die Ausgestaltung der ringförmigen Leiterbahn 51 so gewählt, dass der Wendepunkt 31 und die lokalen Extremwerte 32, 33 innerhalb des Betriebsfrequenzbereichs fB liegen. Die Länge Lz ist in Fig. 2a so gewählt, dass die Antennenzweige 21, 22 jeweils ca. zwei volle Umdrehungen um den zentralen Bereich ausführen. Zur Ausgestaltung der ringförmigen Leiterbahn 51 wird insbesondere deren Form (oval, kreisrund, elliptisch etc.) sowie deren Bahnlänge Lr entlang der Leiterbahn 51 im genannten Sinne bestmöglich gewählt. Bei der hier gewählten ovalen Ausgestaltung der Leiterbahn 51 entspricht dies der bestmöglichen Wahl von Werten für die Radien Rx und Ry der Leiterbahn 51 in x- bzw. y-Richtung. In Fig. 2a nimmt der Quotient der Radien Rx/Ry den Wert 4 an.

Durch die Wahl von Werten für Lz und Lr ist auch die Lage der Verbindungspunkte festgelegt, in denen die Antennenzweige 21, 22 mit der Leiterbahn 51 verbunden sind. Weiterhin sind hierdurch auch die Abstände dieser Verbindungspunkte von den Speisepunkten festgelegt.

In weiteren Ausführungsbeispielen ist die Antenne so ausgestaltet, dass der Frequenzgang X2(f) ausschließlich einen Wendepunkt, nicht jedoch lokale Extremwerte im Betriebsfrequenzbereich aufweist oder aber einen Wendepunkt sowie entweder einen lokalen Maximalwert oder einen lokalen Minimalwert innerhalb von fB aufweist.

Die in Fig. 2b dargestellten Werte des induktiven Blindwiderstands X2 der Antenne 20 entsprechen im Betriebsfrequenzbereich fB in sehr guter Näherung den vorstehend mit Bezug auf Fig. 1 angegebenen Absolutwerten |X1| des kapazitiven Blindwiderstands X1 einer typischen integrierten Empfangsschaltung 17. In besonderem Maße trifft dies für Empfangsschaltungen zu, die im Betriebsfrequenzbereich fB einen über die Frequenz leicht ansteigenden Frequenzgang X1(f) des kapazitiven Btindwiderstandes X1<0 aufweisen.

Aus dem in Fig. 2c gezeigten Frequenzgang R2(f) des Wirkwiderstandes ist zu erkennen, dass der Wirkwiderstand R2 an der unteren Grenze des Betriebsfrequenzbereichs fB einen sehr kleinen Wert von unter 2 Ohm annimmt. Mit zunehmenden Frequenzwerten steigt der Wert des Wirkwiderstandes R2 relativ stark an, bis ungefähr in der Mitte des Betriebsfrequenzbereichs fB bei ca. 910 MHz ein (lokaler) Maximalwert 34 von ca. 34 Ohm erreicht ist. Bei weiter steigenden Frequenzwerten fällt der Wirkwiderstand R2 anschließend wieder relativ stark ab und erreicht bei der oberen Grenze des Betriebsfrequenzbereichs fB einen Wert von ca. 5 Ohm.

Aufgrund der ringförmigen Leiterbahn 51 (Fig. 2a) kommt es zu Entartungen der Resonanzfrequenzen der Antenne. So weist der Frequenzgang X2(f) des Blindwiderstands X2 bei der Frequenz fRES (ca. 910 MHz), bei der der Wirkwiderstand R2 gemäß Fig. 2c den lokalen Maximalwert 34 annimmt, keinen Nulldurchgang, sondern gemäß Fig. 2b einen Wendepunkt 31 auf. Diese Frequenz fRES wird daher auch als "entartete" Resonanzfrequenz bezeichnet.

Der in Fig. 2c dargestellte Verlauf von R2(f) wurde erreicht, indem insbesondere die Bahnbreite Wr der ringförmigen Leiterbahn 51 variiert und ein im Hinblick auf eine Impedanzanpassung optimaler Wert Wr ausgewählt wurde. Dies wird dadurch ermöglicht, dass gemäß Untersuchungen der Anmelderin Veränderungen der Bahnbreite Wr den Frequenzgang R2(f) des Wirkwiderstandes ungleich stärker beeinflussen als den Frequenzgang X2(f) des Blindwiderstands. Gemäß Fig. 2a ändert sich die Bahnbreite Wr entlang der Leiterbahn 51. In y-Richtung beträgt sie ca. 2mm.

Die in Fig. 2c dargestellten Werte des Wirkwiderstands R2 der Antenne 20 entsprechen im Betriebsfrequenzbereich fB in guter Näherung den vorstehend mit Bezug auf Fig. 1 angegebenen Werten des Wirkwiderstands R1 einer typischen integrierten Empfangsschaltung 17 mit einem Wirkwiderstand oberhalb von ca. 15 Ohm. Die Eingangsimpedanz Z2 = R2 + j*X2 der Antenne 20 ist damit im Betriebsfrequenzbereich fB hinreichend genau an die konjugiert komplexen Werte Z1' = R1 - j*X1 der Eingangsimpedanz Z1 = R1 + j*X1 einer solchen Empfangsschaltung angenähert. Eine separate Schaltungsanordnung zur Impedanzanpassung ist vorteilhaft nicht erforderlich.

Auf diese Weise werden transponderseitige Leistungsverluste reduziert, so dass sich hohe Reichweiten ergeben und ein breitbandiger Empfang im gesamten Betriebsfrequenzbereich fB möglich ist. Untersuchungen der Anmelderin haben Reichweiten im Lesebetrieb von ca. 10m für die USA (4 W EIRP) und ca. 9m für den europäischen Markt (2 W ERP) ergeben. Außerdem kann die integrierte Empfangsschaltung 17 hierdurch vorteilhaft ohne Beschränkungen durch separate Bauelemente zur Impedanzanpassung direkt in einem Anschlussbereich der Antenne 16 platziert werden, so dass besonders einfache und kostengünstige, aber dennoch leistungsstarke Transponderrealisierungen ermöglicht werden.

Die Bandbreite des Gesamtsystems (Transponder) hängt stark von der impedanz der integrierten Empfangsschaltung, vom Antennensubstratträger und vom Untergrund, auf dem der Transponder angebracht ist, ab. Untersuchungen der Anmelderin haben ergeben, dass mit der in Fig. 2 a dargestellten Antenne 20 unter den vorstehend mit Bezug auf Fig. 1 erläuterten Randbedingungen Bandbreiten von ca. 70 MHz erreicht werden.

Wie nahe auf diese Weise die induktive Eingangsimpedanz Z2 der Antenne an die ebenfalls induktive Impedanz Z1' herangeführt werden kann, hängt von vielen, insbesondere aber den folgenden Randbedingungen ab: a) der frequenzmäßigen Lage und Breite des gewünschten Betriebsfrequenzbereichs fB, b) dem Wert der kapazitiven Eingangsimpedanz Z1 der Empfangsschaltung 17 sowie dessen Verlauf im Betriebsfrequenzbereich, und c) der genauen Ausgestaltung der Antenne,

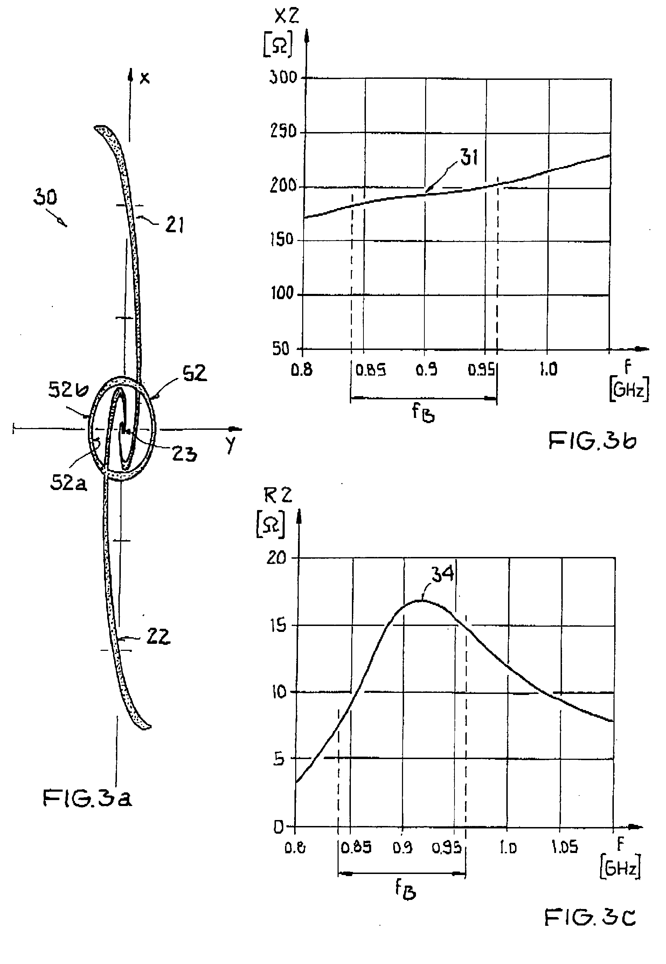

Figur 3 zeigt ein zweites Ausführungsbeispiel einer erfindungsgemäßen Antenne. In Fig. 3a ist die Antenne 30 in einer Draufsicht dargestellt, während die Figuren 3b-c schematisch den Frequenzgang der Eingangsimpedanz Z2 = R2 + j*X2 der Antenne aus Fig. 3a zeigen.

Gemäß Fig. 3a beinhaltet auch die Antenne 30 zwei als Leiterbahnen ausgebildete Antennenzweige 21, 22, die sich spiralförmig vom zentralen Bereich 23 nach außen erstrecken, sowie eine ringförmige Leiterbahn 52, die sich vollständig um den zentralen Bereich 23 erstreckt und die beiden Antennenzweige 21, 22 leitend miteinander verbindet.

Die punktsymmetrischen und bis auf eine Drehung um 180 Grad identischen Antennenzweige 21, 22 bilden wiederum eine in y-Richtung gestauchte bzw. in x-Richtung gestreckte (und daher längliche) logarithmische Spiralantenne. Die Zweige sind wiederum planar ausgestaltet und liegen in einer gemeinsamen Ebene.

Die ringförmige Leiterbahn 52 ist wiederum geschlossen, punktsymmetrisch und - auch in diesem Ausführungsbeispiel - oval ausgebildet. Sie weist eine innere ovale Berandung 52a und eine konzentrische äußere ovale Berandung 52b auf, Sie liegt wiederum in der Ebene der Antennenzweige 21, 22.

In y-Richtung weist die in Fig. 3a dargestellte Antenne 30 die gleiche Ausdehnung (ca. 17 mm) wie die in Fig. 2a gezeigte Antenne 20 auf, während sie in x-Richtung eine größere Ausdehnung von insgesamt ca. 140 mm aufweist und daher im Vergleich zum ersten Ausführungsbeispiel länglicher ausgestaltet ist. Die Antenne 30 ist damit sehr platzsparend und ermöglicht sehr einfache und kostengünstige Transponderrealisierungen. Sie eignet sich ebenfalls für eine Herstellung auf einem Band undloder für Anwendungen, bei denen eine besonders längliche Fläche für die Antenne zur Verfügung steht.

Wie aus dem in Fig. 3b gezeigten Frequenzgang X2(f) zu erkennen ist, weist der Blindwiderstand X2 schon an der unteren Grenze des Betriebsfrequenzbereichs fB einen hohen induktiven Wert von ca. 185 Ohm auf. Mit zunehmenden Frequenzwerten steigt der Blindwiderstand X2 flach, aber beständig an, bis an der oberen Grenze des Betriebsfrequenzbereichs fB ein Wert von ca. 205 Ohm erreicht wird.

Auch dieses Ausführungsbeispiel ist so ausgestaltet, dass der Blindwiderstand X2 der Antenne 30 - wie in Fig. 3b gezeigt - im gesamten Betriebsfrequenzbereich fB induktiv ist (X2>0) und einen Frequenzgang X2(f) mit einem Wendepunkt 31 im Betriebsfrequenzbereich fB aufweist, wobei der Frequenzgang X2(f) vorteilhaft relativ flach ist. Lokale Extremwerte treten hier im Gegensatz zum ersten Ausführungsbeispiel im Betriebsfrequenzbereich fB nicht auf.

Hierzu sind insbesondere die Länge Lz der Antennenzweige 21, 22 und die Ausgestaltung der ringförmigen Leiterbahn 52 so gewählt, dass der Wendepunkt 31 innerhalb des Betriebsfrequenzbereichs fB liegt. Die Länge Lz ist in Fig. 3a so gewählt, dass die Antennenzweige 21, 22 jeweils ca. zwei volle Umdrehungen um den zentralen Bereich ausführen. Zur Ausgestaltung der ringförmigen Leiterbahn 52 wird insbesondere deren Form (oval, kreisrund, elliptisch etc.) sowie deren Bahnlänge Lr entlang der Leiterbahn 52 im genannten Sinne bestmöglich gewählt. Bei der hier gewählten ovalen Ausgestaltung der Leiterbahn 52 entspricht dies der bestmöglichen Wahl von Werten für die Radien Rx und Ry in x- bzw. y-Richtung. In Fig. 3a nimmt der Quotient der Radien Rx/Ry den Wert 1,4 an. Die Werte von Rx und Ry stellen sicher, dass die ringförmige Leiterbahn 52 jeden Antennenzweig nur an genau einer Stelle kontaktiert.

Die in Fig. 3b dargestellten Werte des induktiven Blindwiderstands X2 der Antenne 30 entsprechen im Betriebsfrequenzbereich fB in sehr guter Näherung den vorstehend mit Bezug auf Fig. 1 angegebenen Absolutwerten |X1| des kapazitiven Blindwiderstands X1 einer typischen integrierten Empfangsschaltung 17. In besonderem Maße trifft dies für Empfangsschaltungen zu, die im Betriebsfrequenzbereich fB einen flach verlaufenden, evtl. über die Frequenz leicht abfallenden Frequenzgang X1 (f) des kapazitiven Blindwiderstandes X1 <0 aufweisen.

Aus dem in Fig. 3c gezeigten Frequenzgang R2(f) des Wirkwiderstandes ist zu erkennen, dass der Wirkwiderstand R2 an der unteren Grenze des Betriebsfrequenzbereichs fB einen Wert von ca. 7 Ohm annimmt. Mit zunehmenden Frequenzwerten steigt der Wert des Wirkwiderstandes R2 an, bis ungefähr in der Mitte des Betriebsfrequenzbereichs fB bei ca. 920 MHz ein (lokaler) Maximalwert 34 von ca. 17 Ohm erreicht ist. Bei weiter steigenden Frequenzwerten fällt der Wirkwiderstand R2 anschließend wieder ab und erreicht bei der oberen Grenze des Betriebsfrequenzbereichs fB einen Wert von ca. 15 Ohm.

Auch in diesem Ausführungsbeispiel kommt es aufgrund der ringförmigen Leiterbahn 52 (Fig. 3a) zu Entartungen der Resonanzfrequenzen, wie aus den Figuren 3b und c zu erkennen ist.

Insbesondere die Bahnbreite Wr der ringförmigen Leiterbahn 52 der in Fig. 3a dargestellten Antenne wurde so gewählt (bei ansonsten unveränderten Parametem), dass sich der in Fig. 3c gezeigte Verlauf von R2(f) ergibt. Gemäß Fig. 3a ändert sich die Bahnbreite Wr entlang der Leiterbahn 52. In y-Richtung beträgt sie ca. 0,5mm.

Die in Fig. 3c dargestellten Werte des Wirkwiderstands R2 der Antenne 30 entsprechen im Betriebsfrequenzbereich fB in sehr guter Näherung den vorstehend mit Bezug auf Fig. 1 angegebenen Werten des Wirkwiderstands R1 einer typischen integrierten Empfangsschaltung 17 mit einem Wirkwiderstand im Bereich von ca. 10-15 Ohm. Damit ist die Eingangsimpedanz Z2 der Antenne 30 hinreichend an die konjugiert komplexen Werte der Eingangsimpedanz Z1 einer solchen Empfangsschaltung 17 angeglichen. Eine separate Schaltungsanordnung zur Impedanzanpassung ist vorteilhaft nicht erforderlich.

Aufgrund der geringen Steilheit der Frequenzgänge X2(f), R2(f) im Betriebsfrequenzbereich fB weist die Antenne 30 eine besonders hohe Bandbreite auf. Untersuchungen der Anmelderin haben Bandbreiten des Gesamtsystems von ca. 80 MHz ergeben. Die Reichweiten liegen im Bereich von ca. 11 m für die USA und ca. 10 m für den europäischen Markt. Weitere Untersuchungen haben gezeigt, dass die Antenne 30 im Femfeld eine Strahlungscharakteristik aufweist, die weitgehend derjenigen eines Dipols entspricht.

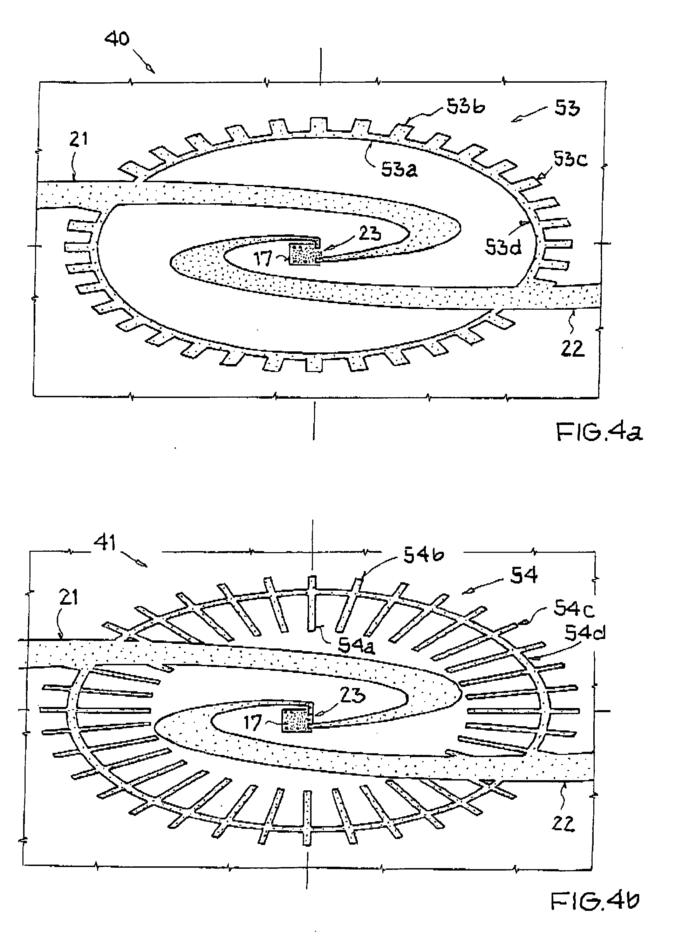

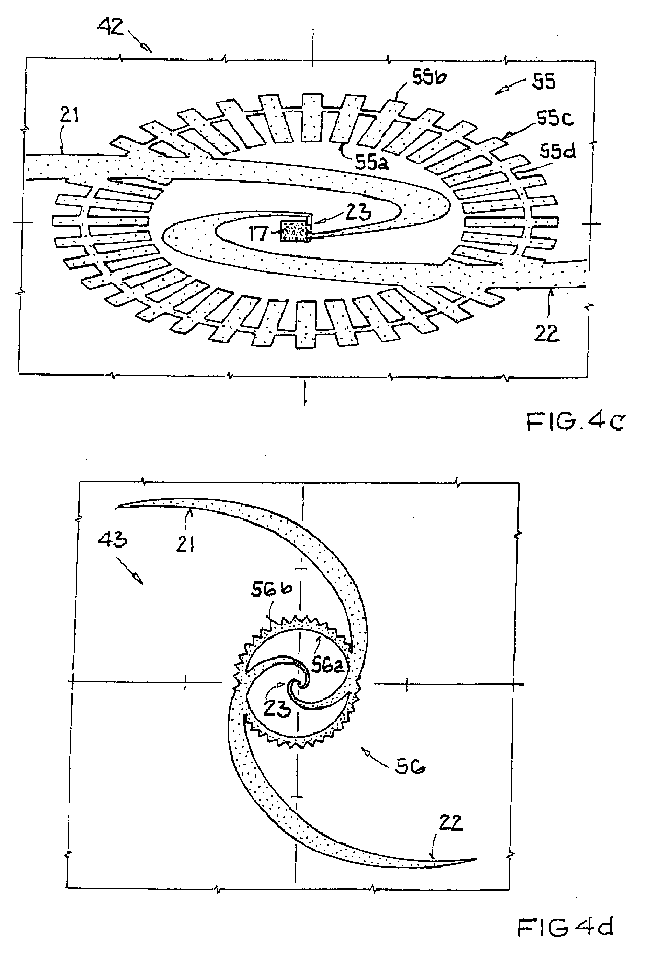

Figur 4 zeigt weitere Ausführungsbeispiele erfindungsgemäßer Antennen, bei denen die ringförmige Leiterbahn besonders vorteilhaft ausgestaltet ist.

Die in den Fig. 4a-d dargestellten ringförmigen Leiterbahnen 53-56 sind jeweils geschlossen, punktsymmetrisch und oval (53-55) bzw. kreisrund (56) ausgebildet. Die gezeigten ringförmigen Leiterbahnen 53-56 unterscheiden sich in ihrer Berandung. Die Berandung ist hierbei im Sinne einer optimalen Impedanzanpassung der jeweiligen Antenne an eine typische integrierte Empfangsschaltung 17 gewählt. Die Berandung ist insbesondere so ausgestaltet, dass die jeweilige Antenne Werte einer induktiven Eingangsimpedanz Z2 aufweist, die im Betriebsfrequenzbereich fB derart an die konjugiert komplexen Werte Z1' der kapazitiven Eingangsimpedanz Z1 angenähert sind, daß zwischen Antenne und integrierter Empfangsschaltung 17 keine Schaltungsanordnung zur Impedanzanpassung erforderlich ist.

Die Fig. 4a-c zeigen vergrößerte Ausschnitte eines inneren Bereichs von drei erfindungsgemäßen Antennen. Bei den Antennen 40-42 handelt es sich um gestauchte bzw. gestreckte logarithmische Spiralantennen mit jeweils zwei, nur teilweise dargestellten Antennenzweigen 21, 22, die sich in jeweils ca. zwei vollen Umdrehungen um den zentralen Bereich 23 erstrecken. Im zentralen Bereich 23 sind die Antennenzweige 21, 22 an ihren Speisepunkten mit einer typischen integrierten Empfangsschaltung 17 verbunden. Die Antennen 40-42 beanspruchen eine längliche Fläche von 140 mm x 17 mm.

Weiterhin weisen die Antennen 40-42 jeweils eine ringförmige Leiterbahn 53-55 auf, die sich vollständig um den zentralen Bereich 23 erstreckt und die Antennenzweige 21, 22 leitend miteinander verbindet. Jede dieser Leiterbahnen 53-55 beinhaltet einen Ring 53d-55d, dessen Form (oval), Bahnlänge, Radien und Bahnbreite wie vorstehend beschrieben ausgestaltet ist. Die Bahnbreite Wr des Rings 53d-55d und damit auch diejenige der Leiterbahn 53-55 ändert sich entlang des Rings bzw. der Leiterbahn.

Zusätzlich weist jede dieser Leiterbahnen 53-55 eine Vielzahl von geraden, quer zur Leiterbahn, d.h. in radialer Richtung verlaufende Teilabschnitte 53c-55c auf, die mit der Leiterbahn 53-55 verbunden sind. Diese geraden Teilabschnitte 53c-55c sind hierbei im Sinne einer bestmöglichen Impedanzanpassung an jeweils eine typische Empfangsschaltung 17 ausgestaltet.

Im Falle der in Fig. 4a dargestellten Antenne 40 sind die Teilabschnitte 53c außerhalb des ovalen Rings 53d angeordnet, so dass die ringförmige Leiterbahn 53 einen inneren glatten Rand 53a und einen mäander- oder zinnenförmigen äußeren Rand 53b aufweist. Durch eine Variation der Breite und/oder der Länge der Teilabschnitte 53c kann vorteilhaft die Impedanzanpassung für typische Empfangsschaltungen mit niedrigem Wirkwiderstand verbessert werden. Im Betriebsfrequenzbereich fB weist die Antenne 40 Wirkwiderstandswerte zwischen ca. 8 und 18 Ohm mit einem sehr flachen Verlauf des Frequenzgangs R2(f) und Blindwiderstandswerte zwischen 190 und 210 Ohm auf.

Bei den in den Fig. 4b-c gezeigten Antennen 41-42 erstrecken sich die Teilabschnitte 54c bzw. 55c von einem Punkt außerhalb des ovalen Rings 54d bzw. 55d bis zu einem Punkt innerhalb des ovalen Rings, so dass sowohl der innere Rand 54a bzw. 55a als auch der äußere Rand 54b bzw. 55b mäander- oder zinnenförmig verlaufen.

Bei der in Fig. 4b gezeigten Antenne 41 wurde die Länge des innerhalb des ovalen Rings 54d liegenden Anteils der Teilabschnitte 54c im Sinne einer bestmöglichen Impedanzanpassung gewählt. Im Betriebsfrequenzbereich fB weist die Antenne 41 einerseits höhere Wirkwiderstandswerte mit einem Maximalwert über 35 Ohm auf. Der Frequenzgang X2(f) des Blindwiderstandes verläuft jedoch vorteilhaft sehr flach und weist neben einem Wendepunkt auch einen lokalen Maximalwert und einen lokalen Minimalwert auf, so dass bei typischen Empfangsschaltungen mit einem entsprechenden Impedanzverlauf vorteilhaft auch hier keine separate Schaltungsanordnung zur Impedanzanpassung erforderlich ist.

Bei der in Fig. 4c gezeigten Antenne 42 wurde zusätzlich die Breite der Teilabschnitte 55c im Sinne einer bestmöglichen Impedanzanpassung gewählt. Im Betriebsfrequenzbereich fB weist die Antenne 42 vorteilhaft einen sehr flachen Verlauf des Frequenzgangs X2(f) des Blindwiderstandes mit Werten zwischen ca, 190 und 205 Ohm auf. Auch der Wirkwiderstand zeigt vorteilhaft ein flaches Verhalten mit Werten zwischen ca. 10 und 27 Ohm, so dass bei typischen Empfangsschaltungen vorteilhaft auch hier keine separate Schaltungsanordnung zur Impedanzanpassung erforderlich ist.

Fig. 4d zeigt eine nicht gestauchte oder gestreckte logarithmische Spiralantenne 43, die eine quadratische Fläche von ca. 100 mm x 100 mm beansprucht. Die Antenne 43 weist eine kreisrunde, ringförmige Leiterbahn 56 mit einem kreisrunden glatten inneren Rand 56a und einem gezackten äußeren Rand 56b auf. In diesem Ausführungsbeispiel wurde die Kantenlänge der v-förmigen Zacken im Sinne einer bestmöglichen Impedanzanpassung gewählt.

Untersuchungen der Anmelderin haben gezeigt, dass die in Fig. 4 dargestellten Antennen Bandbreiten von über 80 MHz ermöglichen.

In weiteren, nicht dargestellten Ausführungsbeispielen ist nur der innere Rand gezackt ausgeführt oder aber es sind beide Ränder gezackt ausgestaltet.

Obgleich die vorliegende Erfindung vorstehend anhand von Ausführungsbeispielen beschrieben wurde, ist sie nicht darauf beschränkt, sondern auf vielfältige Weise modifizierbar. So ist die Erfindung beispielsweise weder auf passive oder semi-passive Transponder, noch auf die angegebenen Frequenzbänder oder die angegebenen Impedanzwerte der integrierten Empfangsschaltung beschränkt. Die Erfindung kann vielmehr vorteilhaft in unterschiedlichsten kontaktlosen Kommunikationssystemen eingesetzt werden.

### Bezugszeichenliste

- 10: RFID-System
- 11: Basisstation, Schreib-/Lesegerät, Lesegerät, Reader
- 12: Antenne der Basisstation
- 13: Sende-/Empfangseinheit der Basisstation
- 14: Kontrolleinheit der Basisstation
- 15: Transponder bzw. Remote Sensor
- 16: Antenne des Transponders
- 17: integrierte Empfangsschaltung des Transponders
- 20: Antenne des Transponders
- 21,22: Antennenzweig
- 23: zentraler Bereich der Antenne
- 30: Antenne des Transponders
- 31: Wendepunkt
- 32: lokaler Maximalwert
- 33: lokaler Minimalwert
- 34: lokaler Maximalwert
- 40-43: Antenne des Transponders
- 51-56: ringförmige Leiterbahn
- 51a-56a: innerer Rand
- 51b-56b: äußerer Rand
- 53c-55c: gerader Teilabschnitt
- 53d-55d: Ring

- EIRP: emitted isotropic radiated power
- ERP: emitted radiated power
- ISM: industrial, scientific, medical (Frequenzband bei 2,4 GHz)
- RFID: Radio frequency identification

- f: Frequenz
- fB: Betriebsfrequenzbereich
- Lr: Bahnlänge
- Lz: Zweiglänge
- R1, R2: Wirkwiderstand von Z1 bzw. Z2, Realteil von Z1 bzw. Z2
- R2(f): Frequenzgang von R2
- Rx, Ry: Radius in x- bzw, y-Richtung
- Wr: Bahnbreite
- Wz: Zweigbreite
- X1, X2: Blindwiderstand von Z1 bzw. Z2, Imaginärteil von Z1 bzw. Z2
- X2(f): Frequenzgang von X2
- Z1=R1+j*X1: Eingangsimpedanz der integrierten Empfangsschaltung
- Z2=R2+j*X2: Eingangsimpedanz der Antenne

## Patentansprüche

1. Antenne (16; 20; 30; 40-43) für einen rückstreubasierten RFID-Transponder (15) mit einer eine kapazitive Eingangsimpedanz (Z1) aufweisenden integrierten Empfangsschaltung (17) zum Empfangen eines spektral in einem Betriebsfrequenzbereich (fB) liegenden Funksignals, beinhaltend:
a) zwei Antennenzweige (21, 22), die sich spiralförmig von einem zentralen Bereich (23), in dem die Antennenzweige mit der integrierten Empfangsschaltung (17) verbindbar sind, nach außen erstrecken,
**dadurch gekennzeichnet, dass**
b) eine ringförmige Leiterbahn (51-56) vorgesehen ist, die sich vollständig um den zentralen Bereich (23) erstreckt und ausgestaltet ist, die Antennenzweige (21, 22) leitend miteinander zu verbinden.

2. Antenne nach Anspruch 1, **dadurch gekennzeichnet, dass**
a) jeder Antennenzweig (21, 22) eine Zweiglänge (Lz) entlang des Zweiges aufweist, und
b) die Zweiglänge (Lz) derart gewählt und die ringförmige Leiterbahn (51-56) derart ausgestaltet ist, dass die Antenne eine Eingangsimpedanz (Z2) mit einem im Betriebsfrequenzbereich (fB) induktiven Blindwiderstand (X2>0) aufweist, dessen Frequenzgang (X2(f)) einen Wendepunkt (31) im Betriebsfrequenzbereich (fB) aufweist.

3. Antenne nach Anspruch 2, **dadurch gekennzeichnet, dass** die Zweiglänge (Lz) derart gewählt und die ringförmige Leiterbahn (51-56) derart ausgestaltet ist, dass der Frequenzgang (X2(f)) des Blindwiderstands (X2) einen lokalen Maximalwert (32) und/oder einen lokalen Minimalwert (33) innerhalb des Betriebsfrequenzbereichs (fB) aufweist.

4. Antenne nach Anspruch 2 oder 3, **dadurch gekennzeichnet, dass** die ringförmige Leiterbahn (51-56) eine Form und eine Bahnlänge (Lr) entlang der Leiterbahn aufweist, die so gewählt sind, dass der Frequenzgang (X2(f)) des Blindwiderstands (X2) einen Wendepunkt (31) im Betriebsfrequenzbereich (fB) aufweist.

5. Antenne nach Anspruch 4, **dadurch gekennzeichnet, dass** die Form und die Bahnlänge (Lr) so gewählt ist, dass der Frequenzgang (X2(f)) des Blindwiderstands (X2) einen lokalen Maximalwert (32) und/oder einen lokalen Minimalwert (33) innerhalb des Betriebsfrequenzbereichs (fB) aufweist.

6. Antenne nach einem der vorhergehenden Ansprüche, **dadurch gekennzeichnet, dass** die ringförmige Leiterbahn (51-56) geschlossen ausgebildet ist.

7. Antenne nach einem der vorhergehenden Ansprüche, **dadurch gekennzeichnet, dass** die ringförmige Leiterbahn (51-56) punktsymmetrisch ausgestaltet ist.

8. Antenne nach einem der vorhergehenden Ansprüche, **dadurch gekennzeichnet, dass** die ringförmige Leiterbahn (51-56) kreisrund, oval oder elliptisch ausgebildet ist.

9. Antenne nach einem der vorhergehenden Ansprüche, **dadurch gekennzeichnet, dass** die ringförmige Leiterbahn (51-56) einen ersten Radius (Rx) aufweist, der so gewählt ist, dass der Frequenzgang (X2(f)) des Blindwiderstands (X2) einen Wendepunkt (31) im Betriebsfrequenzbereich (fB) aufweist.

10. Antenne nach Anspruch 9, **dadurch gekennzeichnet, dass** die ringförmige Leiterbahn (51-55) einen zweiten Radius (Ry) aufweist, der so gewählt ist, dass der Frequenzgang (X2(f)) des Blindwiderstands (X2) einen Wendepunkt (31) im Betriebsfrequenzbereich (fB) aufweist.

11. Antenne nach einem der vorhergehenden Ansprüche, **dadurch gekennzeichnet, dass** die ringförmige Leiterbahn (51-56) eine Bahnbreite (Wr) aufweist, die so gewählt ist, dass die Antenne Werte einer induktiven Eingangsimpedanz (Z2) aufweist, die im Betriebsfrequenzbereich (fB) derart an die konjugiert komplexen Werte (Z1') der kapazitiven Eingangsimpedanz (Z1) angenähert sind, daß zwischen Antenne und integrierter Empfangsschaltung (17) keine Schaltungsanordnung zur Impedanzanpassung erforderlich ist.

12. Antenne nach einem der vorhergehenden Ansprüche, **dadurch gekennzeichnet, dass** die ringförmige Leiterbahn (51-56) eine Berandung (51a-56a, 51b-56b) aufweist, die so ausgestaltet ist, dass die Antenne Werte einer induktiven Eingangsimpedanz (Z2) aufweist, die im Betriebsfrequenzbereich (fB) derart an die konjugiert komplexen Werte (Z1') der kapazitiven Eingangsimpedanz (Z1) angenähert sind, daß zwischen Antenne und integrierter Empfangsschaltung (17) keine Schaltungsanordnung zur Impedanzanpassung erforderlich ist.

13. Antenne nach einem der vorhergehenden Ansprüche, **dadurch gekennzeichnet, dass** die ringförmige Leiterbahn (51-56) eine sich entlang der Leiterbahn ändernde Bahnbreite (Wr) aufweist.

14. Antenne nach einem der vorhergehenden Ansprüche, **dadurch gekennzeichnet, dass** die ringförmige Leiterbahn (53-55) eine Vielzahl von mit der Leiterbahn verbundenen geraden Teilabschnitten (53c-55c) aufweist, die quer zur Leiterbahn verlaufen.

15. Antenne nach Anspruch 14, **dadurch gekennzeichnet, dass** die geraden Teilabschnitte (53c-55c) so ausgestaltet ist, dass die Antenne Werte einer induktiven Eingangsimpedanz (Z2) aufweist, die im Betriebsfrequenzbereich (fB) derart an die konjugiert komplexen Werte (Z1') der kapazitiven Eingangsimpedanz (Z1) angenähert sind, daß zwischen Antenne und integrierter Empfangsschaltung (17) keine Schaltungsanordnung zur Impedanzanpassung erforderlich ist.

16. Antenne nach Anspruch 14 oder 15, **dadurch gekennzeichnet, dass** die geraden Teilabschnitte (53c-55c) eine Länge und eine Breite aufweisen, die so gewählt sind, dass die Antenne Werte einer induktiven Eingangsimpedanz (Z2) aufweist, die im Betriebsfrequenzbereich (fB) derart an die konjugiert komplexen Werte (Z1') der kapazitiven Eingangsimpedanz (Z1) angenähert sind, daß zwischen Antenne und integrierter Empfangsschaltung (17) keine Schaltungsanordnung zur Impedanzanpassung erforderlich ist.

17. Antenne nach einem der vorhergehenden Ansprüche, **dadurch gekennzeichnet, dass** die ringförmige Leiterbahn (56) mindestens eine gezackte Berandung (56b) aufweist.

18. Antenne nach einem der vorhergehenden Ansprüche, **dadurch gekennzeichnet, daß** jeder Antennenzweig (21, 22) eine innere Radialwendel (21a, 22a) und eine äußere Radialwendel (21 b, 22b) bildet, die vorzugsweise einer logarithmischen Funktion folgen.

19. Antenne nach einem der vorhergehenden Ansprüche, **dadurch gekennzeichnet, daß** die Antennenzweige in ihrer äußeren Form identisch ausgestaltet sind.

20. Antenne nach einem der vorhergehenden Ansprüche, **dadurch gekennzeichnet, daß** die Antennenzweige planar ausgestaltet sind und in einer gemeinsamen Ebene liegen.

21. Antenne nach einem der vorhergehenden Ansprüche, **dadurch gekennzeichnet, daß** der Betriebsfrequenzbereich (fB) im UHF- oder im Mikrowellen-Frequenzbereich liegt.

22. Rückstreubasierter RFID-Transponder (15), beinhaltend:
a) eine integrierte Empfangsschaltung (17) mit einer kapazitiven Eingangsimpedanz (Z1),
b) eine mit der integrierten Empfangsschaltung (17) verbundene Antenne nach einem der vorhergehenden Ansprüche.

23. Rückstreubasierter RFID-Transponder nach Anspruch 22, **dadurch gekennzeichnet, daß** die integrierte Empfangsschaltung (17) im zentralen Bereich (23; 33) der Antennenzweige angeordnet ist.

24. Rückstreubasierter RFID-Transponder nach Anspruch 22 oder 23 **dadurch gekennzeichnet, daß** jeder Antennenzweig eine dünne leitfähige Schicht umfaßt, die auf einem Substrat ausgebildet ist, und die integrierte Empfangsschaltung (17) auf dem Substrat ausgebildet ist.
